# NOUVEAU FASCICULE DE BREVET EUROPEEN

(11) **EP 2 896 114 B2**
(45) Date de publication et mention de la décision concernant l'opposition: **25.11.2020**
(45) Mention de la délivrance du brevet: 05.07.2017
(21) Numéro de dépôt: 13795859.1
(22) Date de dépôt: 12.09.2013
(51) Int. Cl.: H02K 1/27

(54) **ROTOR DE MACHINE ÉLECTRIQUE TOURNANTE, COMPORTANT UNE MASSE ROTORIQUE DANS LAQUELLE SONT MÉNAGÉS DES LOGEMENTS**
ROTOR EINER ELEKTRISCHEN ROTATIONSMASCHINE MIT EINEM LÄUFERKÖRPER MIT AUSSPARUNGEN
ROTOR OF A ROTATING ELECTRIC MACHINE, COMPRISING A ROTOR BODY IN WHICH RECESSES ARE PROVIDED

(30) Priorité: 13.09.2012 FR 1258587
(43) Date de publication de la demande: 22.07.2015
(60) Demande divisionnaire: 17167976.4
(73) Titulaire: Moteurs Leroy-Somer, 16915 Angouleme (FR)
(72) Inventeur: KOECHLIN, Samuel, F-16000 Angouleme (FR)
(74) Mandataire: Nony
(86) Numéro de dépôt international: PCT/IB2013/058500
(87) Numéro de publication internationale: WO 2014/041507

(56) Documents cités:
- EP-A2- 1 276 204
- WO-A1-2011/001533
- WO-A1-2011/016089
- WO-A2-2007/055775
- WO-A2-2007/055775
- WO-A2-2010/039786
- WO-A2-2012/004761
- JP-A- 2003 158 838
- US-A1- 2007 228 862
- US-A1- 2009 224 624
- US-B2- 7 498 708

## Description

La présente invention concerne les machines électriques tournantes et notamment celles comportant un rotor à concentration de flux, et plus particulièrement les rotors de telles machines.

On connaît des machines électriques tournantes comportant un rotor qui comporte des aimants disposés dans des logements de manière à définir des pôles du rotor. Les logements peuvent être en forme d'arc de cercle ou de V. Ils sont séparés de l'entrefer par des ponts de matière orientés circonférentiellement, qui permettent de maintenir la cohésion du rotor contre les efforts mécaniques que subit la machine.

De telles machines sont connues par exemple par les brevets EP 0746079, US 6 121 706, US 6 630 762, US 7 779 153, ainsi que par les demandes EP 1 763 121, US 2002/0175584 et WO 2008/123086.

On connaît également par la demande WO 2007/055775 une machine électrique comportant au rotor des logements ayant des petits côtés en forme de demi-cercle.

Par ailleurs, la demande EP 1 276 204 porte sur un moteur à aimants permanents dans lequel les aimants permanents sont disposés en une rangée unique.

Afin d'améliorer la cohésion de la machine à l'encontre des efforts centrifuges, il est également connu de ménager des ponts radiaux entre les logements. Ces ponts sont, par exemple comme dans le brevet US 6 630 762, disposés le long d'un axe radial du pôle correspondant.

Afin d'optimiser la distribution du flux magnétique dans le rotor, on cherche à limiter la taille des ponts radiaux afin de minimiser le passage du flux magnétique dans ces ponts et les pertes de flux dans le pôle.

En revanche, il est nécessaire que ces ponts radiaux aient une épaisseur suffisante pour éviter leur rupture, le rotor étant très fortement sollicité par les forces centrifuges.

Ces exigences contradictoires rendent difficile la conception du rotor.

Il existe donc un besoin pour disposer d'un rotor suffisamment solide pour résister aux efforts centrifuges tout en permettant une bonne circulation du flux et une bonne concentration de ce dernier dans les pôles.

L'invention vise à répondre à ce besoin et a ainsi pour objet, selon un premier de ses aspects suivant la revendication 1, un rotor de machine électrique tournante comportant une masse rotorique dans laquelle sont ménagés des logements de manière à définir les pôles du rotor, chaque pôle ayant un axe radial du pôle, les logements étant de forme allongée et comportant chacun deux petits côtés, les logements étant disposés en plusieurs rangées par pôle, une rangée comportant au moins trois logements disposés consécutivement, leurs petits côtés définissant entre deux logements consécutifs d'une même rangée un pont de matière, ce pont de matière s'étendant généralement selon un axe longitudinal du pont orienté obliquement en rapprochement de l'axe radial du pôle correspondant du rotor, lorsque l'on se déplace en s'éloignant de l'axe de rotation.

Le rotor selon l'invention permet de concilier les exigences contradictoires précitées, c'est-à-dire d'une part la circulation du flux dans le circuit magnétique, et d'autre part la tenue mécanique du rotor. Les ponts de matière orientés obliquement mentionnés ci-dessus permettent de supporter les efforts centrifuges auxquels peut être soumis le rotor, sans pénaliser la machine sur le plan magnétique.

Ainsi, grâce à l'invention, on peut réduire la largeur du pont pour la même vitesse de rotation et obtenir une meilleure concentration du flux magnétique dans le pôle correspondant. On peut réduire les contraintes dans les ponts en équilibrant mieux les efforts de flexion, et n'obtenir sensiblement que des contraintes de traction dans ces ponts. On peut également, avec une même largeur de pont, être en mesure de faire fonctionner la machine à une vitesse de rotation plus élevée et obtenir une meilleure concentration du flux magnétique dans les pôles.

Le rotor comporte des aimants permanents insérés dans tous les logements.

Les aimants permanents peuvent être réalisés en ferrites ou avec des terres rares ou avec tout autre type de matériau magnétique. La disposition des logements permet de concentrer le flux des aimants et d'obtenir avec des aimants en ferrites des performances intéressantes. Dans un exemple de réalisation, les logements d'une même rangée sont disposés selon une branche centrale et deux branches latérales situées de part et d'autre de la branche centrale, donnant par exemple une configuration en U, la branche centrale étant par exemple seule à comporter un ou plusieurs aimants permanents, les branches latérales ne logeant pas d'aimant permanent.

Par « axe radial du pôle », on entend un axe du pôle orienté radialement, c'est-à-dire selon un rayon du rotor. Il peut s'agir d'un axe de symétrie pour le pôle. Cet axe radial peut intersecter le sommet du pôle.

Les ponts de matière formés entre les logements s'étendent obliquement généralement selon un axe longitudinal du pont qui forme avec l'axe radial du pôle correspondant du rotor un angle d'une valeur non nulle et supérieure à 5°. mieux supérieure à 10°. par exemple de l'ordre d'environ 15°. L'angle est inférieur à 45°, mieux inférieur à 30°, voire inférieur à 20°.

Par « axe longitudinal du pont » on désigne l'axe disposé de manière centrale par rapport aux deux petits côtés des logements adjacents définissant ce pont de matière. Cet axe est de préférence rectiligne.

La concavité de la rangée peut être orientée vers le sommet du pôle, c'est à dire vers l'entrefer. Pour un même pôle, les logements de ce pôle sont disposés en plusieurs rangées, chacune de concavité qui peut être orientée vers le sommet du pôle, notamment en rangées sensiblement concentriques. Par « concentriques », on entend que des axes médians des logements des rangées, pris dans un plan perpendiculaire à l'axe de rotation du rotor, se coupent en un même point. Cette disposition en plusieurs rangées concentriques permet d'améliorer la concentration du flux sans nécessairement avoir à augmenter la taille des logements ou la quantité d'aimants permanents nécessaires pour obtenir un flux équivalent. Le nombre de rangées par pôle peut notamment être de deux, trois ou quatre.

Lorsque le rotor comporte pour un même pôle plusieurs rangées, ces dernières peuvent être de longueur décroissante lorsque l'on se déplace en direction de l'entrefer, la plus longue étant plus proche de l'axe de rotation et la plus courte du côté de l'entrefer. La longueur d'une rangée correspond à la longueur cumulée des logements de cette rangée.

Au moins, deux logements de deux rangées d'un même pôle peuvent s'étendre parallèlement l'un à l'autre. Tous les logements d'une rangée peuvent s'étendre parallèlement aux logements correspondants d'une autre rangée.

Le rotor peut comporter autant de ponts de matière orientés obliquement que de rangées de logements, voire jusqu'à deux fois plus, ou même trois fois plus. Le nombre de ponts de matière orientés obliquement dans un pôle peut être égal au nombre de logements dans le pôle, auquel on soustrait le nombre de rangées dans ledit pôle.

Une rangée comporte au moins trois logements. Une rangée peut par exemple comporter un logement central et deux logements latéraux. Au moins une rangée peut comporter un nombre impair de logements, par exemple au moins trois logements.

Deux rangées d'un même pôle peuvent avoir un nombre de logements différent. Dans un exemple de réalisation de l'invention, au moins un pôle comporte une rangée de logements comportant un nombre inférieur de logements à ceux d'une autre rangée de ce pôle, par exemple deux contre trois pour l'autre rangée. La rangée ayant le plus faible nombre de logements est de préférence la plus proche de l'entrefer et la plus éloignée de l'axe de rotation.

La disposition des logements et/ou des ponts de matière dans une rangée est de préférence symétrique par rapport à l'axe radial du pôle.

Dans une rangée, les logements peuvent être disposés en V ou en U, le U pouvant avoir une forme évasée vers l'entrefer. Autrement dit, les logements constituant les branches latérales du U peuvent être non parallèles entre eux. Ainsi, l'inclinaison des ponts radiaux peut être opposée à celle des logements latéraux, par rapport à l'axe radial du pôle.

Lorsque les logements d'une même rangée sont disposés selon un arrangement en forme de U, le logement central peut être de longueur supérieure ou inférieure à celle d'une branche du U. Dans un exemple de réalisation, les branches du U sont plus courtes que la branche centrale constituant le fond du U.

Les logements peuvent s'étendre chacun, lorsqu'observés en section dans un plan perpendiculaire à l'axe de rotation du rotor, selon un axe longitudinal qui peut être rectiligne ou courbe.

Les logements peuvent avoir une largeur constante ou variable lorsque l'on se déplace le long de leur axe longitudinal, dans un plan perpendiculaire à l'axe de rotation du rotor.

Les petits côtés d'un logement sont orientés en direction de l'axe radial du pôle lorsque l'on se déplace en éloignement de l'axe de rotation, et convergent par exemple sensiblement vers le sommet du pôle.

Les logements peuvent avoir, en section transversale, c'est-à-dire perpendiculairement à l'axe de rotation, une forme générale rectangulaire ou trapézoïdale, cette liste n'étant pas limitative.

Les petits côtés d'un logement peuvent être perpendiculaires aux grands côtés du logement. Les petits côtés d'un logement peuvent être inclinés par rapport aux grands côtés du logement.

Au moins un logement peut avoir deux grands côtés, l'un des grands côtés étant plus petit que l'autre. Dans ce cas, par exemple lorsque le logement est de forme générale trapézoïdale, le plus court des grands côtés peut être situé plus près de l'entrefer que le plus long des grands côtés.

Les petits côtés d'un logement sont rectilignes. Les ponts de matière entre deux logements consécutifs d'une rangée peuvent avoir une largeur, mesurée perpendiculairement à leur axe longitudinal, inférieure à 8 mm et les ponts de matière peuvent avoir une largeur supérieure à 0,5 mm.

Les aimants permanents peuvent être de forme générale rectangulaire. Compte-tenu de la forme des logements, la mise en place des aimants dans les logements peut laisser un espace libre dans le logement entre les aimants et les petits côtés du logement correspondant. L'espace libre est par exemple de forme générale triangulaire.

Selon l'invention, les axes longitudinaux de deux ponts de matière de deux rangées différentes d'un même pôle sont parallèles entre eux.

Ils sont décalés d'une distance *d* comprise entre 0 (valeur exclue) et 10 mm. La distance *d* est mesurée perpendiculairement auxdits axes longitudinaux. Cette distance *d* est inférieure à la plus grande largeur des ponts de matière correspondants. Un tel décalage permet de compenser les flexions introduites par les forces centrifuges.

L'invention a pour objet un rotor de machine électrique tournante comportant une masse rotorique dans laquelle sont ménagés des logements de manière à définir les pôles du rotor, chaque pôle ayant un axe radial du pôle,
les logements étant de forme allongée et comportant chacun deux petits côtés, les logements étant disposés pour chaque pôle en plusieurs rangées par pôle, dont la concavité peut être orientée vers l'entrefer, une rangée comportant au moins trois logements disposés consécutivement, leurs petits côtés définissant entre deux logements consécutifs d'une même rangée un pont de matière,
ce pont de matière s'étendant généralement selon un axe longitudinal du pont, les axes longitudinaux de deux ponts de matière appartenant à deux rangées différentes étant parallèles entre eux et décalés d'une distance *d* comprise entre 0 (valeur exclue) et 10 mm. Suivant un exemple ne faisant pas partie de l'invention, les axes longitudinaux de ces deux ponts de matière sont non parallèles entre eux. Ils peuvent former avec l'axe radial du pôle un angle qui varie, par exemple qui augmente lorsque l'on se rapproche de l'axe de rotation.

Il est particulièrement avantageux de procéder à un décalage des axes longitudinaux des ponts de matière, notamment lorsque les logements d'une rangée sont disposés en U et que les branches latérales de chaque U sont plus courtes que la branche centrale, ou en variante lorsque la branche centrale est la seule à comporter un aimant permanent et que les logements correspondant aux branches latérales ne comportent pas d'aimant permanent.

Le décalage des axes longitudinaux des ponts peut se faire dans ce cas vers l'axe radial du pôle lorsque l'on se rapproche de l'axe de rotation, autrement dit le décalage se fait du côté opposé de l'axe radial du pôle lorsque l'on se rapproche du sommet du pôle.

Le décalage des axes longitudinaux des ponts peut se faire en variante vers l'axe radial du pôle lorsqu'on s'éloigne de l'axe de rotation, autrement dit le décalage se fait en direction de l'axe radial du pôle lorsque l'on se rapproche du sommet du pôle.

Il est particulièrement avantageux de procéder à un tel décalage des axes longitudinaux des ponts de matière, notamment lorsque les logements d'une rangée sont disposés en U et que les branches latérales de chaque U sont plus longues que la branche centrale, ou en variante lorsque les branches latérales sont les seules à comporter un aimant permanent et que les logements correspondant à la branche centrale ne comportent pas d'aimant permanent.

Le décalage est inférieur à
la plus grande largeur des ponts.

La masse rotorique peut être formée d'un empilement de tôles ou d'une ou plusieurs tôle(s) individuelle(s) enroulée(s) sur elle(s)-même(s) autour de l'axe de rotation. Chaque couche de tôle de la masse rotorique peut être d'un seul tenant. Le rotor peut être dépourvu de pièces polaires individuelles.

Le rotor peut comporter un nombre de pôles compris entre 2 et 12, mieux entre 4 et 8.

L'invention a encore pour objet, selon un autre de ses aspects, une machine électrique tournante comportant un rotor tel que décrit plus haut. La machine peut être à reluctance. Elle peut constituer un moteur synchrone.

La machine peut fonctionner à une vitesse périphérique nominale (vitesse tangentielle prise au diamètre extérieur du rotor) qui peut être supérieure ou égale à 100 mètres par seconde, la machine selon l'invention permettant un fonctionnement à des vitesses importantes si cela est souhaité.

La machine peut avoir une taille relativement élevée. Le diamètre du rotor peut être supérieur à 50 mm, mieux supérieur à 80 mm, étant par exemple compris entre 80 et 300 mm.

L'invention pourra être mieux comprise à la lecture de la description détaillée qui va suivre, d'exemples de réalisation non limitatifs de celle-ci, et l'examen du dessin annexé, sur lequel :
- la figure 1 est une vue schématique et partielle d'un rotor,
- la figure 2 en représente un détail de réalisation,
- la figure 3 est une vue schématique et partielle faisant apparaître l'axe longitudinal d'un pont de matière,
- les figures 4 et 5 sont des vues analogues à la figure 2 de variantes de réalisation,
- la figure 6 illustre le coefficient de sécurité en fatigue pour les configurations des figures 2, 4 et 5,
- les figures 7 et 7a sont des vues analogues à la figure 2 de variantes de réalisation, la direction d'aimantation des aimants étant matérialisée par une flèche,
- la figure 8 est une vue schématique et partielle illustrant le décalage entre les axes longitudinaux des ponts de matière,
- la figure 9 en est une vue de détail selon IX, et
- les figures 10 à 13 sont des exemples ne faisant pas partie de l'invention.

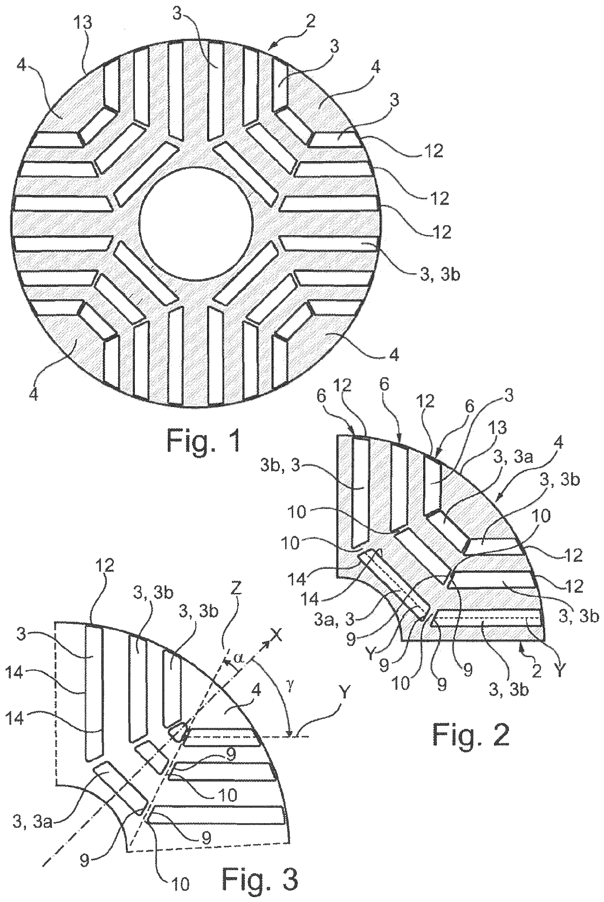

On a illustré aux figures 1 à 3 un rotor 1 de machine électrique tournante, comportant une masse rotorique 2 dans laquelle sont ménagés des logements 3 de manière à définir les pôles 4 du rotor, chaque pôle ayant un axe radial X.

Dans cet exemple, le rotor comporte neuf logements par pôle, qui sont disposés en trois rangées concentriques 6 autour de chacun des pôles, la concavité des rangées étant orientée vers l'entrefer. Une rangée 6 comporte trois logements 3 disposés consécutivement dans la rangée. Les trois rangées 6 d'un même pôle sont de longueur décroissante lorsque l'on se déplace en direction de l'entrefer, la plus longue étant située du côté de l'axe de rotation et la plus courte du côté de l'entrefer.

Les logements 3 sont de forme allongée, s'étendant chacun selon un axe longitudinal Y qui forme un angle γ avec l'axe radial X du pôle. Ils comportent chacun deux petits côtés 9, les petits côtés respectifs 9 de deux logements consécutifs 3 d'une même rangée 6 définissant entre eux un pont de matière 10.

Le pont de matière 10 s'étend généralement selon un axe longitudinal Z du pont orienté en rapprochement de l'axe radial X du pôle correspondant du rotor 1 lorsque l'on s'éloigne de l'axe de rotation. L'axe longitudinal Z du pont de matière 10 est rectiligne et forme avec l'axe radial X du pôle correspondant du rotor un angle α d'une valeur non nulle et supérieure à 5°, qui est dans cet exemple de l'ordre d'environ 15°.

Les petits côtés 9 d'un logement sont orientés en direction de l'axe radial X du pôle lorsque l'on se déplace en direction de l'entrefer. Les logements 3 sont de forme générale trapézoïdale, et ont deux grands côtés 14, l'un des grands côtés étant plus petit que l'autre, le plus court des grands côtés étant plus près de l'entrefer que le plus long des grands côtés.

Le rotor 1 comporte deux fois plus de ponts de matière que de rangées de logements, chaque rangée 6 comportant trois logements 3 et deux ponts de matière 10. Le nombre de ponts de matière 10 dans un pôle 4 est égal au nombre de logements dans le pôle, auquel on soustrait le nombre de rangées 6 dans ledit pôle. Chaque rangée 6 comporte un logement central 3a et deux logements latéraux 3b. La disposition des logements et des ponts de matière dans une rangée est symétrique par rapport à l'axe radial X du pôle.

Les logements latéraux sont séparés de l'entrefer par des ponts tangentiels 12.

Ces ponts tangentiels ne reprennent qu'une partie assez faible des efforts centrifuges, tandis que les ponts 10 qui séparent deux logements doivent supporter l'essentiel de la charge des efforts centrifuges.

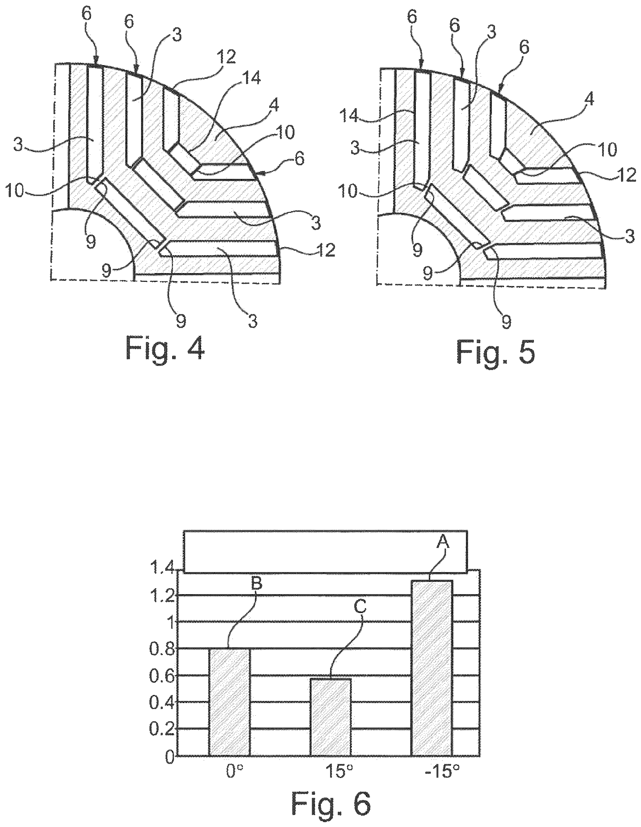

Pour faire apparaître les avantages de l'invention en termes de sécurité en fatigue, on a illustré à la figure 6 le coefficient de sécurité en fatigue qui traduit l'effort centrifuge que peut supporter le rotor, lorsqu'il est infiniment répété, en fonction de l'angle α. Il évolue en raison inverse de la contrainte au point le plus sollicité dans la structure. Le coefficient A correspondant à la configuration de la figure 2 est comparé aux coefficients B et C des configurations des figures 4 et 5, pour lesquels l'angle α est respectivement nul, les axes des ponts de matière 10 étant parallèles à l'axe radial X du pôle, et de 15° dans le sens opposé, les axes des ponts de matière 10 étant orientés en éloignement de l'axe radial X du pôle correspondant du rotor 1 lorsque l'on se déplace en direction de l'entrefer 11. On voit que le coefficient de sécurité en fatigue est maximum pour la configuration selon l'invention, où l'axe Z est orienté en rapprochement de l'axe X du pôle correspondant lorsque l'on se rapproche de l'entrefer.

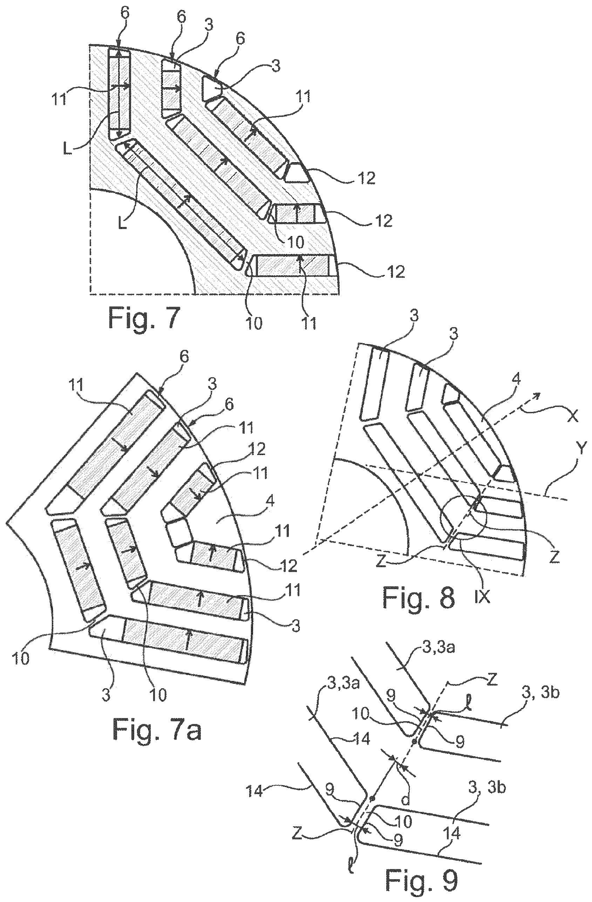

Le rotor 1 peut comporter des aimants permanents 11 insérés dans chacun des logements, les aimants n'étant pas représentés sur la figure 1 mais visibles sur la figure 7, leur direction d'aimantation étant illustrée par des flèches. Les aimants permanents sont dans cet exemple de forme générale rectangulaire en section transversale. La mise en place des aimants dans les logements peut laisser un espace libre 15 dans chaque logement entre l'aimant et les petits côtés du logement correspondant. L'espace libre peut être de forme générale triangulaire, comme illustré.

Dans une variante ne faisant pas partie de l'invention, certains des logements peuvent être dépourvus d'aimant. Dans l'exemple de réalisation illustré à la figure 7, les logements de l'une des rangées sont disposés en une branche centrale et deux branches latérales, la branche centrale étant seule à comporter un aimant permanent, les logements latéraux ne comportant pas d'aimant permanent. Dans l'exemple de la figure 7a, c'est le contraire.

En outre, on voit sur la figure 7 que les logements centraux d'une rangée peuvent avoir une longueur L supérieure à celle des logements latéraux de ladite rangée, ainsi les branches latérales du U sont plus courtes que la branche centrale. C'est également le contraire dans l'exemple de la figure 7a.

Les figures 7 et 7a diffèrent également de la figure 1 par le fait que les ponts de matière 10 des différentes rangées y ont une largeur *l* variable, allant en diminuant lorsque l'on se rapproche de l'entrefer 13.

En outre, sur la figure 7, les axes longitudinaux de deux ponts de matière de deux rangées différentes sont parallèles entre eux et décalés d'une distance *d* non nulle, par exemple d'environ 1,5 mm, ce décalage ayant lieu en s'éloignant de l'axe radial lorsque l'on s'éloigne de l'axe de rotation. La distance *d* est mesurée perpendiculairement auxdits axes longitudinaux Z. Les axes Z des ponts ont été illustrés à la figure 8, et le décalage *d* entre eux à la figure 9.

Dans le mode de réalisation de la figure 7a, le décalage des axes longitudinaux des ponts peut se faire en variante vers l'axe radial du pôle lorsqu'on s'éloigne de l'axe de rotation, autrement dit le décalage se fait en direction de l'axe radial du pôle lorsque l'on se rapproche du sommet du pôle. Dans l'exemple de la figure 1, les axes longitudinaux de deux ponts de matière de deux rangées différentes sont parallèles entre eux et confondus, lorsque l'on est d'un même côté de l'axe X.

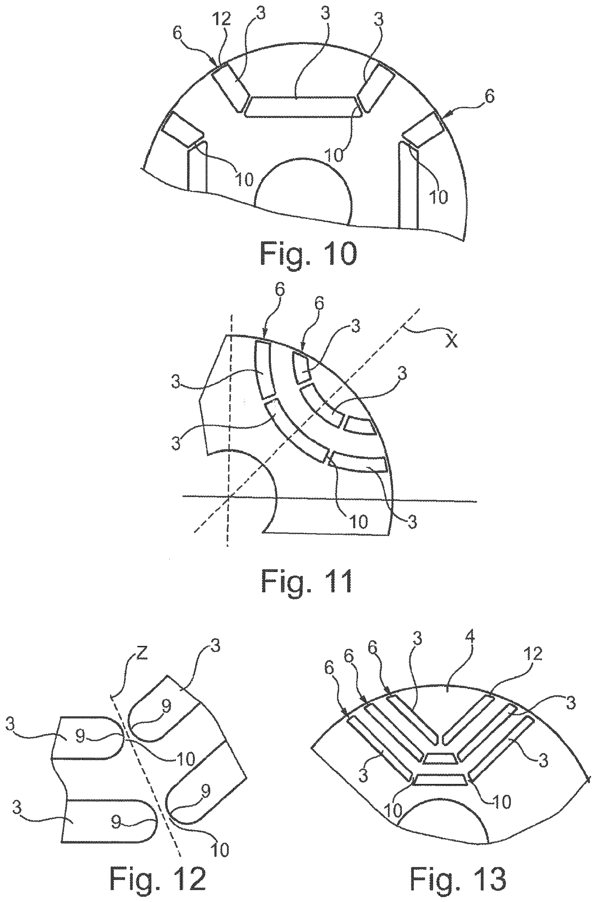

Le rotor peut comporter une seule rangée de logements par pôle, comme illustré à titre d'exemple ne faisant pas partie de l'invention à la figure 10.

Les logements peuvent s'étendre chacun selon un axe longitudinal qui peut être rectiligne, comme illustré précédemment, ou courbe, comme illustré à la figure 11.

Les petits côtés d'un logement peuvent être rectilignes, comme illustré précédemment, ou courbes, comme illustré à la figure 12.

Toutes les rangées peuvent comporter le même nombre de logements, comme décrit précédemment. On ne sort pas du cadre de la présente invention s'il en est autrement. A titre d'exemple on a illustré à la figure 13 un exemple dans lequel deux rangées d'un même pôle ont un nombre de logements différent. Par exemple, comme illustré, une rangée de logements en comporte deux, à savoir la rangée la plus proche de l'entrefer, et les autres rangées comportent trois logements.

De plus, la rangée la plus proche de l'entrefer comporte deux logements disposés en V. Dans cette rangée, le pont 10 est ainsi central. Les deux autres rangées comportent chacune trois logements disposés en U évasé, avec chacune deux ponts de matière 10 symétriques par rapport à l'axe radial X du pôle.

L'invention n'est pas limitée aux exemples illustrés. On peut notamment modifier la polarité du rotor sans sortir du cadre de la présente invention.

Le rotor peut coopérer avec tout type de stator, à bobinage distribué ou concentré.

L'expression « comportant un » doit être comprise comme étant synonyme de « comportant au moins un ».

## Revendications

1. Rotor (1) de machine électrique tournante, comportant une masse rotorique (2) dans laquelle sont ménagés des logements (3) de manière à définir les pôles (4) du rotor, chaque pôle ayant un axe radial (X) du pôle,
les logements (3) étant de forme allongée et comportant chacun deux petits côtés (9), les logements étant disposés en plusieurs rangées (6) par pôle, les logements dans une rangée étant disposés en U, le U pouvant avoir une forme évasée vers l'entrefer,
une rangée (6) comportant au moins trois logements (3) disposés consécutivement, leurs petits côtés (9) définissant entre deux logements consécutifs d'une même rangée un pont de matière (10),
ce pont de matière (10) s'étendant généralement selon un axe longitudinal (Z) du pont orienté en rapprochement de l'axe radial (X) du pôle correspondant du rotor, lorsque l'on s'éloigne de l'axe de rotation,
**caractérisé en ce que** les petits côtés d'un logement sont rectilignes, les axes longitudinaux de deux ponts de matière de deux rangées différentes d'un même pôle étant parallèles entre eux et décalés d'une distance (*d*) comprise entre 0 (valeur exclue) et 10 mm,
le décalage étant inférieur à la plus grande largeur des ponts,
les ponts de matière des différentes rangées ont une largeur variable, allant en diminuant lorsque l'on se rapproche de l'entrefer,
les ponts de matière s'étendant obliquement généralement selon un axe longitudinal du pont qui forme avec l'axe radial du pôle correspondant du rotor un angle d'une valeur supérieure à 5° et inférieure à 45°,
le rotor comportant des aimants permanents insérés dans chacun des logements.

2. Rotor selon la revendication précédente, dans lequel :
a) (i) les branches latérales de chaque U sont plus courtes que la branche centrale ou (ii) la branche centrale est la seule à comporter un aimant permanent et les logements correspondant aux branches latérales ne comportent pas d'aimant permanent, et
b) le décalage des axes longitudinaux des ponts se fait vers l'axe radial du pôle lorsque l'on se rapproche de l'axe de rotation.

3. Rotor selon la revendication 1, dans lequel :
a) (i) les branches latérales de chaque U sont plus longues que la branche centrale ou (ii) les branches latérales sont les seules à comporter un aimant permanent et les logements correspondant à la branche centrale ne comporte pas d'aimant permanent, et
b) le décalage des axes longitudinaux des ponts se fait vers l'axe radial du pôle lorsque l'on s'éloigne de l'axe de rotation.

4. Rotor selon l'une quelconque des revendications précédentes, les petits côtés d'un logement étant rectilignes, dans lequel le pont de matière (10) s'étend généralement selon un axe longitudinal (Z) du pont qui forme avec un axe radial (X) du pôle correspondant du rotor un angle (α) d'une valeur inférieure à 30°.

5. Rotor selon l'une quelconque des revendications précédentes, dans lequel le pont de matière (10) s'étend généralement selon un axe longitudinal (2) du pont qui forme avec un axe radial (X) du pôle correspondant du rotor un angle (α) d'une valeur non nulle et supérieure à 10°.

6. Rotor selon l'une quelconque des revendications précédentes, au moins une rangée (4) comportant un nombre impair de logements (3), notamment au moins trois logements.

7. Rotor selon l'une quelconque des revendications précédentes, dans lequel, lorsque le rotor (1) comporte pour un même pôle (4) plusieurs rangées (6), ces dernières sont de longueur décroissante lorsque l'on se déplace en direction de l'entrefer.

8. Rotor selon l'une quelconque des revendications précédentes, la disposition des logements (3) et/ou des ponts de matière (10) dans une rangée étant symétrique par rapport à l'axe radial (X) du pôle.

9. Rotor selon l'une quelconque des revendications précédentes, le pont de matière (10) ayant une largeur (*l*), mesurée perpendiculairement à son axe longitudinal, inférieure à 8 mm, et pouvant être notamment supérieure à 0.5 mm.

10. Rotor selon l'une quelconque des revendications précédentes, les axes longitudinaux (Z) de deux ponts de matière (10) de deux rangées différentes (6) étant parallèles entre eux.

11. Rotor selon l'une quelconque des revendications précédentes, dans lequel les logements (3) sont de forme générale trapézoïdale, le plus court des grands côtés (14) du logement étant plus près de l'entrefer que le plus long des grands côtés.

12. Rotor selon l'une quelconque des revendications précédentes, le nombre de ponts (10) orientés obliquement dans un pôle (4) étant égal au nombre de logements dans le pôle, auquel on soustrait le nombre de rangées dans ledit pôle.

13. Rotor selon l'une quelconque des revendications précédentes, la masse rotorique (2) étant formée d'un empilement de couches de tôle, chaque couche de tôle de la masse rotorique étant d'un seul tenant.

14. Machine électrique tournante comportant un rotor (1) selon l'une quelconque des revendications précédentes.

## Patentansprüche

1. Rotor (1) einer elektrischen Rotationsmaschine, mit einer Rotormasse (2), in der Aufnahmen (3) derart gebildet sind, dass Pole (4) des Rotors definiert werden, wobei jeder Pol eine radiale Polachse (X) hat,
wobei die Aufnahmen (3) eine längliche Form haben und jeweils zwei kurze Seiten (9) aufweisen, wobei die Aufnahmen in mehreren Reihen (6) je Pol angeordnet sind, die Aufnahmen in einer Reihe U-förmig angeordnet sind, wobei das U eine sich zum Luftspalt hin erweiternde Form haben kann,
wobei eine Reihe (6) wenigstens drei Aufnahmen (3) aufweist, die eine nach der anderen angeordnet sind und deren kurze Seiten (9) zwischen zwei aufeinanderfolgenden Aufnahmen derselben Reihe eine Materialbrücke (10) begrenzen,
wobei diese Materialbrücke (10) sich allgemein in Richtung einer Längsachse (Z) der Brücke erstreckt, die so orientiert ist, dass sie sich der radialen Achse (X) des entsprechenden Pols des Rotors annähert, wenn man sich von der Drehachse entfernt,
**dadurch gekennzeichnet, dass** die kurzen Seiten einer Aufnahme gerade sind, die Längsachsen von zwei Materialbrücken von zwei verschiedenen Reihen eines selben Pols zueinander parallel sind und einen Abstand (d) zueinander haben, der zwischen 0 (größer als Null) und 10 mm beträgt,
wobei die Abweichung kleiner als die größte Breite der Brücken ist,
die Materialbrücken der verschiedenen Reihen eine variable Breite aufweisen, die abnimmt, wenn man sich dem Luftspalt annähert,
wobei die Materialbrücken sich allgemein schräg entlang einer Längsachse der Brücke erstrecken, die mit der radialen Achse des entsprechenden Pols des Rotors einen Winkel von über 5° und unter 45° bildet,
wobei der Rotor Permanentmagneten aufweist, die in jeder der Aufnahmen eingesetzt sind.

2. Rotor nach dem vorhergehenden Anspruch, bei dem:
a) (i) die seitlichen Arme jedes U kürzer sind als der mittlere Arm oder (ii) der mittlere Arm der einzige ist, der einen Permanentmagneten aufweist, und die den seitlichen Armen entsprechenden Aufnahmen keine Permanentmagneten aufweisen, und
b) die Abweichung der Längsachsen der Brücken sich der radialen Achse des Pols nähert, wenn man sich der Drehachse annähert.

3. Rotor nach Anspruch 1, bei dem:
a) (i) die seitlichen Arme jedes U länger sind als der mittlere Arm oder (ii) die seitlichen Arme die einzigen sind, die einen Permanentmagneten aufweisen, und die dem mittleren Arm entsprechenden Aufnahmen keine Permanentmagneten aufweisen, und
b) die Abweichung der Längsachsen der Brücken sich der radialen Achse des Pols nähert, wenn man sich von der Drehachse entfernt.

4. Rotor nach einem der vorstehenden Ansprüche, bei dem die kurzen Seiten einer Aufnahme gerade sind, wobei die Materialbrücke (10) sich allgemein entlang einer Längsachse (Z) der Brücke erstreckt, die mit einer radialen Achse (X) des entsprechenden Pols des Rotors einen Winkel (α) von weniger als 30° bildet.

5. Rotor nach einem der vorstehenden Ansprüche, bei dem die Materialbrücke (10) sich allgemein entlang einer Längsachse (2) der Brücke erstreckt, die mit einer radialen Achse (X) des entsprechenden Pols des Rotors einen Winkel (α) bildet, dessen Wert nicht null und größer als 10° ist.

6. Rotor nach einem der vorstehenden Ansprüche, bei dem wenigstens eine Reihe (4) eine ungerade Anzahl von Aufnahmen (3) aufweist, insbesondere wenigstens drei Aufnahmen.

7. Rotor nach einem der vorstehenden Ansprüche, bei dem, wenn der Rotor (1) für ein und denselben Pol (4) mehrere Reihen (6) aufweist, diese letzteren von abnehmender Länge sind, wenn man sich in Richtung auf den Luftspalt bewegt.

8. Rotor nach einem der vorstehenden Ansprüche, bei dem die Anordnung der Aufnahmen (3) und/oder der Materialbrücken (10) in einer Reihe symmetrisch in Bezug auf die radiale Achse (X) des Pols ist.

9. Rotor nach einem der vorstehenden Ansprüche, bei dem die Materialbrücke (10) eine Breite (1) hat, gemessen rechtwinklig zu ihrer Längsachse, welche Breite kleiner ist als 8 mm und insbesondere größer als 0,5 mm sein kann.

10. Rotor nach einem der vorstehenden Ansprüche, bei dem die Längsachsen (Z) von zwei Materialbrücken (10) von zwei verschiedenen Reihen (6) zueinander parallel sind.

11. Rotor nach einem der vorstehenden Ansprüche, bei dem die Aufnahmen (3) eine allgemein trapezförmige Gestalt haben, wobei die kürzeste der langen Seiten (14) der Aufnahme näher an dem Luftspalt liegt als die längste der langen Seiten.

12. Rotor nach einem der vorstehenden Ansprüche, bei dem die Anzahl der Brücken (10), die in einem Pol (4) schräg angeordnet sind, gleich der Anzahl der Aufnahmen in dem Pol ist, von der man die Anzahl der Reihen in diesem Pol abzieht.

13. Rotor nach einem der vorstehenden Ansprüche, bei dem die Rotormasse (2) durch einen Stapel von Blechen gebildet ist, wobei jedes Blech der Rotormasse in einem Stück ausgebildet ist.

14. Elektrische Rotationsmaschine mit einem Rotor (1) nach einem der vorstehenden Ansprüche.

## Claims

1. A rotor (1) of a rotating electric machine, comprising a rotor body (2) in which recesses (3) are provided in such a way as to define the poles (4) of the rotor, each pole having a radial axis (X) of the pole,
the recesses (3) having an elongated shape and each comprising two short sides (9), the recesses being disposed in one or a plurality of rows (6) per pole, the recesses in one row being disposed in the shape of a U, the U possibly having a shape that is flared towards the air gap,
one row (6) comprising at least three recesses (3) disposed consecutively, the short sides (9) thereof defining, between two consecutive recesses on a given row, a material bridge (10),
said material bridge (10) generally extending along a longitudinal axis (2) of the bridge which is oriented and which came closer to the radial axis (X) of the corresponding pole of the rotor, when one is moving away from the rotational axis,
**characterized by** the fact that the short sides of a recess are rectilinear, the longitudinal axes of two material bridges on two different rows of a given pole being parallel to each other, and being offset by a distance (*d*) in the range between 0 (excluded value) and 10 mm,
the offset being smaller than the greatest width of the bridges,
the material bridges on the different rows have a variable width, which diminishes as one moves closer to the air gap,
the material bridges extend obliquely generally along a longitudinal axis of the bridge, which, together with a radial axis of the corresponding pole of the rotor, forms an angle having a value greater than 5° and smaller than 45°,
the rotor comprising permanent magnets inserted into at least each of said recesses.

2. Rotor according to the preceding claim, wherein
a) (i) the lateral branches of each U are shorter than the central branch or (ii) the central branch is alone in comprising a permanent magnet and the recesses corresponding to the lateral branches do not comprise a permanent magnet, and
b) the offset of the longitudinal axes of the bridges is produced towards the radial axis of the pole as one moves closer to the rotational axis.

3. Rotor according to claim 1, wherein
a) (i) the lateral branches of each U are longer than the central branch or (ii) the lateral branches are alone in comprising a permanent magnet and the recesses corresponding to the central branch do not comprise a permanent magnet, and
b) the offset of the longitudinal axes of the bridges is produced towards the radial axis of the pole as one moves away from the rotational axis.

4. Rotor according to any preceding claim, the short sides of a recess being rectilinear, wherein the material bridge (10) extends generally along a longitudinal axis (Z) of the bridge which form with a radial axis (X) of the corresponding pole of the rotor an angle (X) having a value smaller than 30°.

5. The rotor as claimed in one of the preceding claims, in which the material bridge (10) extends generally along a longitudinal axis (2) of the bridge, which, together with a radial axis (X) of the corresponding pole of the rotor, forms an angle (α) having a value other than zero and greater than 10°.

6. The rotor as claimed in any of the preceding claims, at least one row (4) comprising an odd number of recesses (3), in particular at least three recesses.

7. The rotor as claimed in any of the preceding claims, in which, when the rotor (1) comprises a plurality of rows (6) for a given pole (4), the latter have a decreasing length as one moves in the direction of the air gap.

8. The rotor as claimed in any of the preceding claims, the disposition of the recesses (3) and/or of the material bridges (10) on one row being symmetrical in relation to the radial axis (X) of the pole.

9. The rotor as claimed in any of the preceding claims, the material bridge (10) having a width (*l*), measured perpendicularly to its longitudinal axis, of less than 8 mm, and being possibly greater than 0.5 mm.

10. The rotor as claimed in any of the preceding claim, the longitudinal axes (Z) of two material bridges (10) on two different rows (6) being parallel to each other.

11. The rotor as claimed in any of the preceding claims, in which the recesses (3) are of generally trapezoidal shape, the shorter of the long sides (14) of the recess being closer to the air gap than the longer of the long sides.

12. The rotor as claimed in any of the preceding claims, the number of bridges (10) oriented obliquely in a pole (4) being equal to the number of recesses in the pole, from which the number of rows in said pole is subtracted.

13. The rotor as claimed in any of the preceding claims, the rotor body (2) consisting of a stack of sheet metal layers, each sheet metal layer of the rotor body being in a single piece.

14. A rotating electric machine comprising a rotor (1) as claimed in any of the preceding claims.
